# DEMANDE DE BREVET EUROPEEN

(11) **EP 4 803 842 A1**
(43) Date de publication de la demande: **09.09.2026**
(21) Numéro de dépôt: 26162165.0
(22) Date de dépôt: 04.03.2026
(51) Int. Cl.: F28D 20/00

(54) **CUVE THERMOCLINE POUR LE STOCKAGE D'ÉNERGIE THERMIQUE**

(30) Priorité: 04.03.2025 FR 2502176
(71) Demandeur: Coretec - Conception Réalisation Thermique Energétique et Climatique, 69150 Décines-Charpieu (FR)
(72) Inventeur: MANGEOL, Quentin, 69150 DECINES-CHARPIEU (FR); DEGORGES, Mathis, 69150 DECINES-CHARPIEU (FR); CHEVAIS, Vincent, 69150 DECINES-CHARPIEU (FR)
(74) Mandataire: Plasseraud IP

(57) **Abrégé**

Il est proposé une cuve thermocline (30) pour le stockage d'énergie thermique, comportant :
- une enceinte (20) formant un volume de stockage d'un liquide, l'enceinte (20) comportant une entrée (21) configurée pour recevoir un débit de liquide, dit débit d'entrée (Q1),
- un diffuseur (1) disposé dans l'enceinte (20), le diffuseur (1) étant configuré pour orienter le débit d'entrée (Q1) du liquide dans l'enceinte (20), comportant :
-- un corps (2) s'étendant selon un axe (D2), le corps (2) comportant une paroi latérale (3), une paroi de fond (4) et une sortie (5),
-- un canal de circulation (6) en connexion fluidique avec l'entrée (21) de l'enceinte (20), le canal de circulation (6) s'étendant à l'intérieur du corps (2) entre une première extrémité (7) disposée sur la paroi latérale (3) et une deuxième extrémité (8) disposée en vis-à-vis de la paroi de fond (4).

## Description

### Domaine technique

La présente divulgation se rapporte au domaine des cuves de stockage d'énergie thermique, encore appelée cuves thermoclines.

### Technique antérieure

Certains procédés industriels produisent des effluents liquides à haute température, en plus de l'objet principal visé par ces procédés. Ces effluents ne sont pas directement utilisables dans le cadre de la mise en œuvre des procédés les ayant générés, mais ils peuvent être utilisés pour d'autres applications. Les phases de production de chaleur et les phases d'utilisation de la chaleur produite peuvent être décalées dans le temps, il est donc nécessaire de stocker temporairement la chaleur produite.

Par exemple, un flux de liquide chauffé peut être stocké dans une cuve de stockage isolée thermiquement, en attendant d'être utilisé. Un exemple d'utilisation est par exemple l'alimentation d'un réseau de chaleur urbain, pouvant chauffer un ensemble d'habitations. Une telle cuve de stockage thermique, encore appelé cuve thermocline, forme un volume de stockage d'un liquide à haute température.

Lorsque la cuve fournit du liquide à haute température, le liquide prélevé de la cuve est remplacé par du liquide à plus faible température. La cuve de stockage comprend donc une zone contenant du liquide à haute température, une zone de liquide à basse température et une zone de transition entre ces deux zones, dite zone thermocline. Afin de pouvoir continuer à fournir du liquide à haute température, il est souhaitable que l'épaisseur de la couche thermocline soit la plus fine possible.

Il existe ainsi un besoin de disposer de cuves de stockage d'énergie thermique permettant d'obtenir une zone thermocline de faible épaisseur.

### Résumé

A cette fin, l'invention propose une cuve thermocline pour le stockage d'énergie thermique, la cuve thermocline comportant :
- une enceinte formant un volume de stockage d'un liquide, l'enceinte comportant une entrée configurée pour recevoir un débit de liquide, dit débit d'entrée,
- un diffuseur disposé dans l'enceinte, le diffuseur étant configuré pour orienter le débit d'entrée du liquide dans l'enceinte,
le diffuseur comportant :
-- un corps s'étendant selon un axe, le corps comportant une paroi latérale, une paroi de fond et une sortie,
-- un canal de circulation en connexion fluidique avec l'entrée de l'enceinte, le canal de circulation s'étendant à l'intérieur du corps entre une première extrémité du canal de circulation disposée sur la paroi latérale et une deuxième extrémité du canal de circulation disposée en vis-à-vis de la paroi de fond.

Le diffuseur est configuré pour orienter de manière contrôlée le liquide admis dans l'enceinte, et ainsi limiter le phénomène de mélange avec le liquide déjà contenu dans l'enceinte de la cuve. Une séparation franche entre le liquide le plus froid et le liquide le plus chaud peut ainsi être maintenue. Autrement dit, une zone thermocline fine peut être maintenue, ce qui permet d'améliorer les performances thermiques de la cuve thermocline, particulièrement lorsque le débit d'entrée du liquide est élevé.

Les caractéristiques listées dans les paragraphes suivant peuvent être mises en œuvre indépendamment les unes des autres ou selon toutes les combinaisons techniquement possibles :
L'enceinte comprend une sortie configurée pour fournir un débit de liquide, dit débit de sortie.

La cuve thermocline permet le stockage d'énergie thermique, sous la forme qu'un volume de liquide à une température supérieure à la température ambiante.

Selon un aspect de l'invention, le diffuseur est configuré pour faire passer le liquide de la deuxième extrémité du canal de circulation à la sortie du corps.

La paroi de fond est configurée pour diriger le liquide provenant du canal de circulation vers la sortie du corps.

La deuxième extrémité du canal de circulation est distante de la paroi de fond du corps du diffuseur.

Selon un mode de réalisation de la cuve thermocline, le corps du diffuseur est de forme tubulaire et comprend une première extrémité axiale opposée à la paroi de fond,
et la sortie du diffuseur est adjacente à la première extrémité axiale du corps.

Selon un aspect de la cuve thermocline, la sortie du corps du diffuseur comprend un ensemble d'orifices traversants formés sur une plaque perforée.

Les trous traversants de la plaque perforée du diffuseur ont la même forme.

Les orifices traversants de la plaque perforée du diffuseur sont de forme circulaire.
Les trous traversants de la plaque perforée du diffuseur ont le même diamètre.

Les orifices traversants de la plaque perforée du diffuseur ont un diamètre compris entre 1,0 millimètre et 16,0 millimètres, par exemple égal à 10,0 millimètres.

La plaque perforée du diffuseur comprend entre 2000 orifices traversants par mètre carré et 30000 orifices traversants par mètre carré.

Les orifices traversants de la plaque perforée du diffuseur sont régulièrement espacés selon une première direction.

Les orifices traversants de la plaque perforée du diffuseur sont régulièrement espacés selon une deuxième direction perpendiculaire à la première direction.

La section efficace totale de l'ensemble d'orifices traversant de la plaque perforée du diffuseur est comprise entre 10% et 40% de l'aire totale délimitée par le pourtour de la plaque perforée du diffuseur.

La section efficace du canal de circulation est inférieure à la section efficace de la sortie.

La section efficace du canal de circulation est comprise entre 10% et 40% de la section efficace totale de l'ensemble d'orifices traversant de la plaque perforée du diffuseur.

Selon un mode de réalisation, le corps du diffuseur est de forme cylindrique.

Selon un mode de réalisation, le corps du diffuseur a une forme générale de cylindre de révolution.

Le corps du diffuseur est rigide.

La paroi de fond est reliée à la paroi latérale et obture une deuxième extrémité axiale du corps.

Le canal de circulation du diffuseur est rigide.

La paroi de fond est étanche.
La paroi latérale est étanche.

Selon un mode de réalisation de la cuve thermocline, l'enceinte comprend une paroi de fond, et la sortie du diffuseur est tournée vers la paroi de fond de l'enceinte.

Le liquide admis dans la cuve est dirigé par le diffuseur vers la paroi de fond de l'enceinte, ce qui limite le mélange du liquide admis dans la cuve thermocline avec le liquide qui était déjà contenu dans la cuve thermocline.

Selon un mode de réalisation, le canal de circulation comprend :
- une première portion s'étendant transversalement à l'axe du corps depuis la paroi latérale du corps,
- une deuxième portion s'étendant parallèlement à l'axe du corps, la deuxième portion comprenant la deuxième extrémité du canal de circulation,
- une portion coudée reliant la première portion à la deuxième portion.

Ainsi, le liquide s'écoulant dans le canal de circulation est dirigé vers la paroi de fond du diffuseur. La paroi de fond étant fermée, le liquide change de direction et s'écoule dans le corps du diffuseur jusqu'à la sortie du corps. Le diffuseur permet de dissiper une partie de l'énergie cinétique du débit de liquide admis dans l'enceinte de la cuve de stockage, ce qui limite la tendance de ce liquide froid admis de se mélanger avec le liquide chaud déjà dans l'enceinte de la cuve thermocline. La zone thermocline est ainsi de faible épaisseur, ce qui permet d'augmenter la quantité de liquide utilisable.

Selon un exemple de réalisation, la deuxième portion du canal de circulation et la paroi latérale du corps sont coaxiales.

Les turbulences dans le liquide circulant dans le corps sont ainsi réduites.

Selon un exemple de réalisation, la première portion du canal de circulation et la paroi latérale du corps sont perpendiculaires.

La portion coudée du canal de circulation peut posséder un rayon de courbure constant.

Le rayon de courbure de la portion coudée est compris entre 100% et 500% d'un diamètre du canal de circulation.

Le diamètre du canal de circulation est compris entre 5% et 20% du diamètre du corps du diffuseur.

Selon un mode de réalisation, la deuxième extrémité du canal de circulation et la sortie du corps du diffuseur s'étendent dans des plans parallèles.

Une distance entre la deuxième extrémité du canal de circulation et la paroi de fond du corps du diffuseur est comprise entre 5% et 20% du diamètre du corps du diffuseur.

Selon un mode de réalisation, la cuve thermocline comporte un canal d'alimentation reliant l'entrée de l'enceinte au canal de circulation du diffuseur.

Le diffuseur peut ainsi être disposé à distance de l'entrée de liquide, et donc éloigné des parois de l'enceinte.

Selon un exemple de réalisation, le canal d'alimentation est de forme tubulaire.

Le canal d'alimentation est par exemple de section transversale circulaire.

Le diamètre du canal d'alimentation est constant le long de sa longueur.

Le canal d'alimentation est par exemple rectiligne.

Le canal d'alimentation est rigide.

Le canal d'alimentation forme un élément de fixation du diffuseur à l'enceinte de la cuve.

Selon un mode de réalisation de la cuve thermocline, le canal d'alimentation et le canal de circulation sont formés par un même tube.

Le nombre de pièces à assembler est ainsi réduit, et l'assemblage du diffuseur est facilité, puisqu'une pièce unique peut assurer plusieurs fonctions.

Le tube formant le canal d'alimentation et le canal de circulation est fixé à la paroi latérale du corps du diffuseur.

Selon un exemple de réalisation de la cuve thermocline, la paroi de fond du corps du diffuseur est plane.

Selon une variante de réalisation, la paroi de fond du corps du diffuseur est de forme bombée.

Cette forme permet de réduire les turbulences dans l'écoulement du liquide circulant dans le diffuseur.

Selon une autre variante, la paroi de fond du corps du diffuseur comprend une portion plane et une portion courbée.

L'enceinte s'étend selon un axe, et l'axe du diffuseur et l'axe de l'enceinte sont parallèles.

De préférence, l'enceinte et le corps du diffuseur sont coaxiaux.

L'enceinte peut être de forme cylindrique.

L'enceinte comprend une paroi latérale, la paroi latérale ayant la forme d'un cylindrique de révolution.

L'entrée de l'enceinte est disposée sur la paroi latérale de l'enceinte. De même, la sortie de l'enceinte est disposée sur la paroi latérale de l'enceinte.

Selon un mode de réalisation, la cuve thermocline comporte une plaque perforée entourant le corps du diffuseur et s'étendant transversalement au corps du diffuseur, la plaque perforée comprenant un ensemble de trous traversants.

Les trous traversants permettent un passage de liquide d'une face de la plaque à l'autre face de la plaque.

L'épaisseur de la plaque perforée est comprise entre 1 millimètre et 30 millimètres.

Les trous traversants ont la même forme.

Les trous traversants sont de forme circulaire.
Les trous traversants ont le même diamètre.
Les trous traversants de la plaque perforée ont un diamètre compris entre 8 millimètres et 26 millimètres.

Un ratio entre l'épaisseur de la plaque perforée et le diamètre des trous traversants est compris entre 0,1 et 1,5.

La plaque perforée comprend entre 600 orifices traversants par mètre carré et 5000 orifices traversants par mètre carré.

Les orifices traversants de la plaque perforée sont régulièrement espacés selon une première direction.
Les orifices traversants de la plaque perforée sont régulièrement espacés selon une deuxième direction perpendiculaire à la première direction.

La section efficace totale de l'ensemble d'orifices traversant de la plaque perforée est comprise entre 5% et 30% de l'aire totale délimitée par le pourtour de la plaque perforée.

Selon un mode de réalisation de la cuve thermocline, l'enceinte comprend une paroi latérale, et la plaque perforée relie la paroi latérale de l'enceinte au corps du diffuseur.

L'ajout de la plaque perforée permet de réduire davantage le phénomène de mélange du liquide admis dans l'enceinte et du liquide déjà stocké dans l'enceinte. L'épaisseur de la zone thermocline peut ainsi être réduite, ce qui améliore l'efficacité de la cuve de stockage thermique.

La liaison entre le corps du diffuseur et la plaque perforée est de préférence étanche.

De même, la liaison entre la plaque perforée et la paroi latérale de l'enceinte de la cuve est de préférence étanche.

Selon un exemple de réalisation de la cuve thermocline, la plaque perforée est adjacente à la sortie du corps du diffuseur.

L'assemblage de la plaque perforée sur le corps du diffuseur est ainsi facilité. De plus, la plaque perforée peut recevoir les perforations formant la sortie du corps du diffuseur.

Selon un mode de réalisation, la plaque perforée reliant la paroi latérale de l'enceinte au corps du diffuseur et la plaque perforée comprenant l'ensemble d'orifices formant sortie du corps du diffuseur forment une même pièce.

Le nombre de pièces est ainsi réduit, puisqu'une même pièce remplit deux fonctions.

La plaque perforée s'étend dans un plan perpendiculaire à l'axe de l'enceinte.

Selon un mode de réalisation, la cuve thermocline comporte :
- une deuxième entrée, configurée pour recevoir un deuxième débit de liquide, dit deuxième débit d'entrée,
- un deuxième diffuseur disposé dans l'enceinte, le deuxième diffuseur étant configuré pour orienter le deuxième débit d'entrée de liquide dans l'enceinte,
le deuxième diffuseur comportant :
-- un corps s'étendant selon un axe, le corps comportant une paroi latérale, une paroi de fond et un orifice de sortie,
-- un canal d'alimentation en connexion fluidique avec la deuxième entrée de l'enceinte, le canal de circulation s'étendant à l'intérieur du corps entre une première extrémité disposée sur la paroi latérale et une deuxième extrémité disposée en vis-à-vis de la paroi de fond.

Chaque entrée de la cuve thermocline est équipée d'un diffuseur permettant de limiter le mélange du liquide admis avec le liquide déjà stocké dans l'enceinte de la cuve.

Selon un mode de réalisation de la cuve thermocline, l'enceinte comprend une paroi sommitale, et l'orifice de sortie du deuxième diffuseur est tourné vers la paroi sommitale de l'enceinte.

De préférence, le premier diffuseur et le deuxième diffuseur sont identiques.

La fabrication peut ainsi être standardisée. De plus, les risques d'erreur de montage sont également réduits.

Selon un exemple de réalisation, la cuve thermocline comporte une deuxième plaque perforée entourant le corps du deuxième diffuseur et s'étendant transversalement au corps du deuxième diffuseur, la deuxième plaque perforée comprenant un ensemble de trous traversants.

Comme précédemment, l'ajout de la plaque perforée permet de compléter l'action du deuxième diffuseur, et ainsi d'améliorer les performances thermiques de la cuve de stockage.

### Brève description des dessins

D'autres caractéristiques, détails et avantages apparaîtront à la lecture de la description détaillée ci-après, et à l'analyse des dessins annexés, sur lesquels :
La figure 1 est un schéma de principe montrant le principe de fonctionnement d'une cuve thermocline,
La figure 2 est une vue générale, de côté, d'une cuve thermocline selon un mode de réalisation de l'invention,

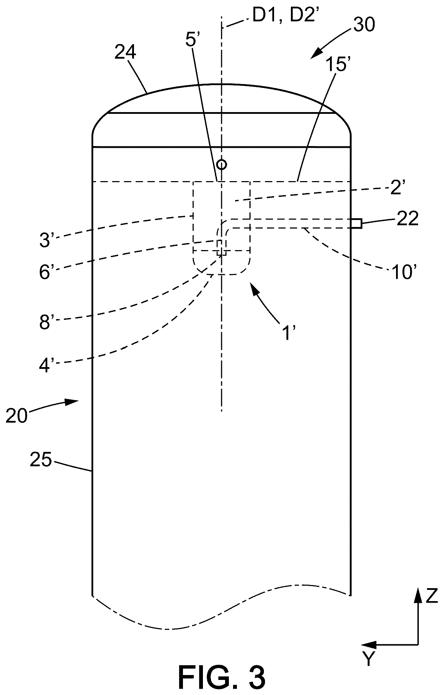

La figure 3 est une vue de détail, de côté, de la cuve thermocline de la figure 2,
La figure 4 est une autre vue de détail, de côté, de la cuve thermocline de la figure 2,
La figure 5 est une autre vue de détail, de côté, de la cuve thermocline de la figure 2,
La figure 6 est une vue en perspective d'un diffuseur équipant une cuve thermocline selon un mode de réalisation,
La figure 7 est une vue en perspective d'un diffuseur équipant une cuve thermocline selon le mode de réalisation de la figure 2,
La figure 8 est une vue en perspective d'un dispositif complétant variante de réalisation du diffuseur de la figure 7,
La figure 9 est une vue en perspective d'une partie du diffuseur de la figure 7,
La figure 10 est une vue, en coupe et en perspective, de la cuve thermocline de la figure 2,
La figure 11 est un schéma de principe détaillant le fonctionnement d'une cuve thermocline selon deux modes de réalisation distincts.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations. Quand il est précisé qu'un dispositif comporte un élément donné, cela n'exclut pas la présence d'autres éléments dans ce dispositif.

Sur les figures, les axes X,Y,Z désignent les trois directions de l'espace. L'axe Z correspond à la direction verticale, et est orienté vers le haut. Les axes X et Y sont deux axes horizontaux et perpendiculaires entre eux.

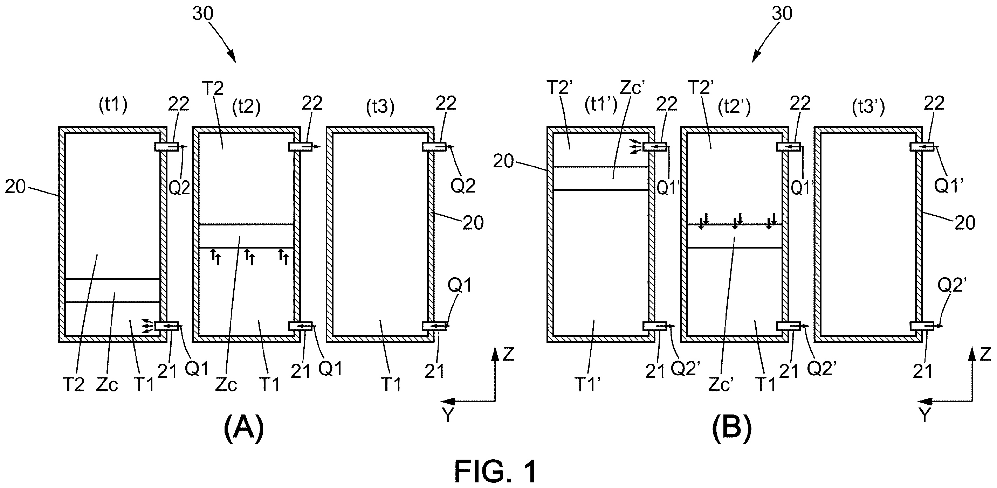

On a représenté schématiquement sur la figure 1 une cuve thermocline 30 pour le stockage d'énergie thermique. Les termes 'cuve thermocline' et 'cuve de stockage d'énergie thermique' sont équivalents.
La cuve thermocline 30 comprend une enceinte 20 formant un volume de stockage de liquide. L'enceinte 20 est par exemple posée sur le sol, par l'intermédiaire de pieds de support, non représentés.
La cuve thermocline 30 permet le stockage d'énergie thermique, sous la forme d'un volume de liquide à une température supérieure à la température ambiante.

La cuve thermocline 30 peut recevoir du liquide chaud provenant d'une source de chaleur, et le stocker. La cuve thermocline 30 peut fournir du liquide chaud, préalablement stocké, à une charge thermique qui va valoriser l'énergie thermique du liquide chaud.
La cuve thermocline 30 peut recevoir du liquide refroidi provenant de la charge thermique. La cuve thermocline 30 peut fournir du liquide refroidi à la source de chaleur, afin que celui-ci soit réchauffé.
Le liquide chaud se situe dans la partie supérieure de l'enceinte 20, et le liquide froid se situe dans la partie inférieure. Une zone thermocline, à température intermédiaire, sépare le liquide froid du liquide chaud.

L'enceinte 20 peut être de forme cylindrique.
L'enceinte 20 comprend une paroi latérale 25, la paroi latérale 25 ayant la forme d'un cylindrique de révolution.
La paroi latérale 25 de l'enceinte 20 est formée par un assemblage de feuillards métalliques cintrés.

La cuve thermocline 30 comporte :
- une première entrée/sortie 21,
- une deuxième entrée/sortie 22.
Selon un premier mode de fonctionnement, schématisé sur la partie A de la figure 1, la première entrée/sortie 21 est configurée pour recevoir un débit de liquide, dit débit d'entrée Q1, et la deuxième entrée/sortie 22 est configurée pour fournir un débit de liquide, dit débit de sortie Q2.
Selon un deuxième mode de fonctionnement, schématisé sur la partie B de la figure 1, la première entrée/sortie 21 est configurée pour fournir un débit de liquide, dit débit de sortie Q2', et la deuxième entrée/sortie 22 est configurée pour recevoir un débit de liquide, dit débit d'entrée Q1'.
La première entrée/sortie 21 est disposée dans la partie inférieure de la cuve 30. La deuxième entrée/sortie 22 est disposée dans la partie supérieure de la cuve 30, c'est-à-dire à une hauteur supérieure à la hauteur de la première entrée/sortie 21.

Selon le premier mode de fonctionnement, illustré sur la partie A de la figure 1, la première entrée/sortie 21 reçoit un débit de liquide Q1 à une première température T1, et la deuxième entrée/sortie 22 fournit un débit de liquide Q2 à une deuxième température T2. La deuxième température T2 est supérieure à la première température T1.

Ce mode de fonctionnement est appelé phase de décharge, et correspond à une utilisation, ou consommation, du liquide chaud qui était stocké dans la cuve thermocline 30. Ce liquide chaud est fourni à une charge thermique, non représentée sur les figures, qui utilise une partie de l'énergie thermique du liquide chaud. La charge thermique peut être par exemple un réseau de chauffage urbain.
Le liquide chaud qui quitte la cuve 30 par la deuxième entrée/sortie 22 est compensé par une entrée de liquide à température plus froide, cette entrée de liquide ayant lieu par la première entrée/sortie 21. Le liquide à température plus froide est par exemple du liquide provenant de la charge thermique, ayant cédé une partie de son énergie thermique.
A l'instant t1, la cuve 30 contient essentiellement du liquide chaud, à température T2, qui occupe la partie supérieure de la cuve 30.
La partie inférieure contient du liquide dit froid, à température T1, qui occupe la partie inférieure de la cuve 30.
Entre les deux, on trouve une zone à température intermédiaire entre la température T1 et la température T2, dite zone thermocline Zc.
A l'instant t2, ultérieur à l'instant t1, la quantité de liquide chaud a diminué par rapport à l'instant t1, en raison de la quantité de liquide chaud soutirée. La zone thermocline Zc se situe plus haut dans l'enceinte 20 qu'à l'instant t1.
A l'instant t3, ultérieur à l'instant t2, l'enceinte 20 est entièrement remplie de liquide froid, c'est-à-dire que le liquide chaud stocké a été entièrement utilisé. Il n'y a pas de zone thermocline, la température est homogène à l'intérieur de la cuve 30.

Selon le deuxième mode de fonctionnement, illustré sur la partie B de la figure 1, la première entrée/sortie 21 fournit un débit Q2' de liquide à une première température T1', et la deuxième entrée/sortie 22 reçoit un débit de liquide Q1' à une deuxième température T2'. La deuxième température T2' est supérieure à la première température T1'.

Le deuxième mode de fonctionnement correspond à une phase de charge de la cuve de stockage, c'est-à-dire à une phase d'introduction de liquide chaud dans la cuve 30, afin de stocker celui-ci en vue d'une utilisation ultérieure.
Ce liquide chaud provient d'une source thermique, par exemple un four d'une unité de production.
Le débit d'entrée Q1' correspond à du liquide chaud, qui remplace progressivement le liquide froid qui se trouvait dans l'enceinte 20 de la cuve 30. Le liquide froid sort de l'enceinte 20 par la première entrée/sortie 21.
A l'instant t1', correspondant au début de la phase de charge, l'enceinte 20 contient essentiellement du liquide froid, à température T1, qui occupe la partie inférieure de la cuve 30. La partie supérieure contient du liquide chaud à température T2, fourni par la deuxième entrée/sortie 22. Entre les deux, on trouve une zone à température intermédiaire entre la température T1 et la température T2, dite zone thermocline Zc'.
A l'instant t2', ultérieur à t1', correspondant à environ 50% d'avancement de la phase de charge, la quantité de liquide chaud a augmenté par rapport à l'instant t1', en raison de la quantité de liquide chaud apportée. La zone thermocline Zc' se situe plus bas dans la cuve qu'à l'instant t1'.
A l'instant t3', ultérieur à t2', la phase de charge est terminée et l'enceinte 20 de la cuve 30 est entièrement remplie de liquide chaud. Il n'y a pas de zone thermocline, la température est homogène à l'intérieur de la cuve 30, et correspond à la température T2 du liquide chaud stocké en vue d'une réutilisation ultérieure.

La capacité de stockage de l'enceinte 20 de la cuve 30 est par exemple comprise entre 5 m³ et 150 m³. (mètre cube)
Le débit de sortie de l'enceinte 20 est compris entre 5 m³/h (mètre cube par heure) et 1000 m³/h.
Le liquide stocké dans l'enceinte 20 est par exemple de l'eau.
En variante, le liquide stocké peut être une huile thermique, ou de l'eau glycolée.

Un critère de performance de la cuve thermocline 30 est sa capacité à assurer une zone thermocline Zc de faible épaisseur. Autrement dit, il est souhaitable d'avoir une séparation la plus franche possible entre la zone à la température T2 et la zone à la température T1. Il convient donc d'éviter autant que possible un mélange entre le liquide chaud et le liquide froid, aussi bien au cours des phases de charge que des phases de décharge.

A cette fin, l'invention propose une cuve thermocline 30 pour le stockage d'énergie thermique. La cuve thermocline 30 comporte :
- une enceinte 20 formant un volume de stockage d'un liquide, l'enceinte 20 comportant une entrée 21 configurée pour recevoir un débit de liquide, dit débit d'entrée Q1,
- un diffuseur 1 disposé dans l'enceinte 20, le diffuseur 1 étant configuré pour orienter le débit d'entrée Q1 du liquide dans l'enceinte 20.
Le diffuseur 1 comporte :
-- un corps 2 s'étendant selon un axe D2, le corps 2 comportant une paroi latérale 3, une paroi de fond 4 et une sortie 5,
-- un canal de circulation 6 en connexion fluidique avec l'entrée 21 de l'enceinte 20. Le canal de circulation 6 s'étend à l'intérieur du corps 2 entre une première extrémité 7 du canal de circulation 6 disposée sur la paroi latérale 3 et une deuxième extrémité 8 du canal de circulation 6 disposée en vis-à-vis de la paroi de fond 4.

Le diffuseur 1 permet d'orienter de manière contrôlée le liquide admis dans l'enceinte 20 par l'entrée 21, et ainsi limiter le phénomène de mélange du liquide admis avec le liquide déjà contenu dans l'enceinte de la cuve 20. Une séparation franche entre le liquide le plus froid et le liquide le plus chaud peut ainsi être maintenue. Autrement dit, une zone thermocline fine peut être maintenue, ce qui permet d'améliorer les performances thermiques de la cuve thermocline 30.
Le diffuseur 1 est ainsi configuré pour contrôler une direction d'écoulement et une vitesse d'écoulement du débit d'entrée de liquide dans l'enceinte 20 de la cuve thermocline 30.
Le corps 2 du diffuseur 1 forme un déflecteur qui modifie la direction d'écoulement ainsi que la vitesse d'écoulement du liquide admis dans la cuve thermocline 1, et permet de limiter les mélanges entre le liquide chaud et le liquide froid.
En particulier, lors d'une phase dite de décharge de la cuve de stockage, le diffuseur 1 limite le mélange du liquide froid admis dans l'enceinte 20 avec le liquide chaud déjà contenu dans l'enceinte 20 de la cuve thermocline 30.

L'enceinte 20 comprend une sortie 22 configurée pour fournir un débit de liquide, dit débit de sortie Q2.
L'entrée 21 est disposée sur la paroi latérale 25 de l'enceinte 20.
De même, la sortie 22 est disposée sur la paroi latérale 25 de l'enceinte 20.

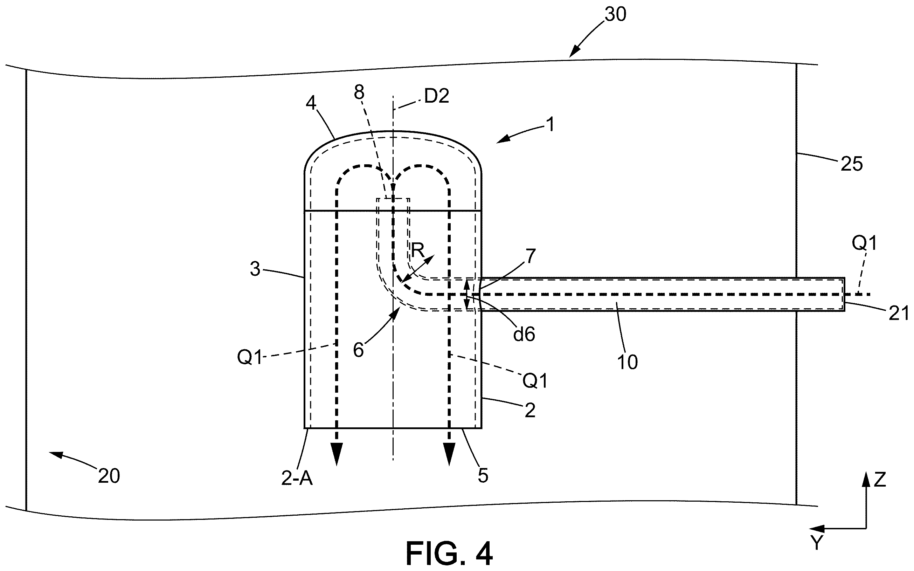

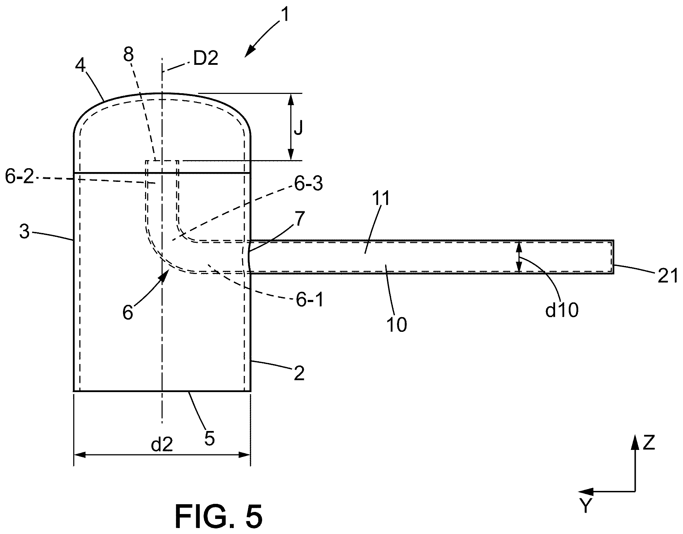

Comme schématisé notamment sur les figures 4 et 5, le corps 2 du diffuseur 1 forme une chambre pouvant contenir du liquide. La chambre est délimitée par la face interne de la paroi latérale 3 du corps 2, par la paroi de fond 4 du corps 2, et par la sortie 5. La sortie 5 permet au liquide contenu dans la chambre de s'écouler hors du corps 2 du diffuseur 1.
La deuxième extrémité 8 du canal de circulation 6 forme un orifice de sortie du canal de circulation 6. Cet orifice de sortie est disposé en vis-à-vis de la paroi de fond 4, c'est-à-dire que l'orifice de sortie fait face à la paroi de fond 4.

Le diffuseur 1 est configuré pour faire passer le liquide de la deuxième extrémité 8 du canal de circulation 6 à la sortie 5 du corps 2.
La paroi de fond 4 est configurée pour diriger le liquide provenant du canal de circulation 6 vers la sortie 5 du corps 2.
Sur la figure 4, les flèches en traits pointillés désignées par le signe Q1 schématisent l'écoulement du liquide admis dans le diffuseur 1.

La deuxième extrémité 8 du canal de circulation 6 est distante de la paroi de fond 4 du corps 2 du diffuseur 1.
En d'autres termes, un jeu est présent entre l'extrémité 8 du canal de circulation 6 et la paroi de fond 4 du corps du diffuseur 1.
La deuxième extrémité 8 du canal de circulation 6 forme une sortie du canal de circulation 6.
Le canal de circulation 6 est un canal de guidage du liquide admis dans le diffuseur 1.
Le canal de circulation 6 comprend une seule sortie, formée à une extrémité du canal 6. Autrement dit, la paroi latérale du canal de circulation 6 est étanche, c'est-à-dire dépourvue d'ouverture.
Le liquide circulant de l'entrée 21 à la première extrémité 7 du canal de circulation 6 peut sortir du canal de circulation 6 seulement par la deuxième extrémité 8 du canal de circulation 6.
Selon un autre mode de fonctionnement du diffuseur 1, qui sera détaillé ultérieurement, une circulation en sens inverse est possible. Autrement dit, une circulation de liquide depuis la deuxième extrémité 8 du canal de circulation 6 vers la première extrémité 7 est possible.

Selon l'exemple illustré, le corps 2 du diffuseur 1 est de forme tubulaire et comprend une première extrémité axiale 2-A opposée à la paroi de fond 4, et la sortie 5 du diffuseur 1 est adjacente à la première extrémité axiale 2-A du corps 2.

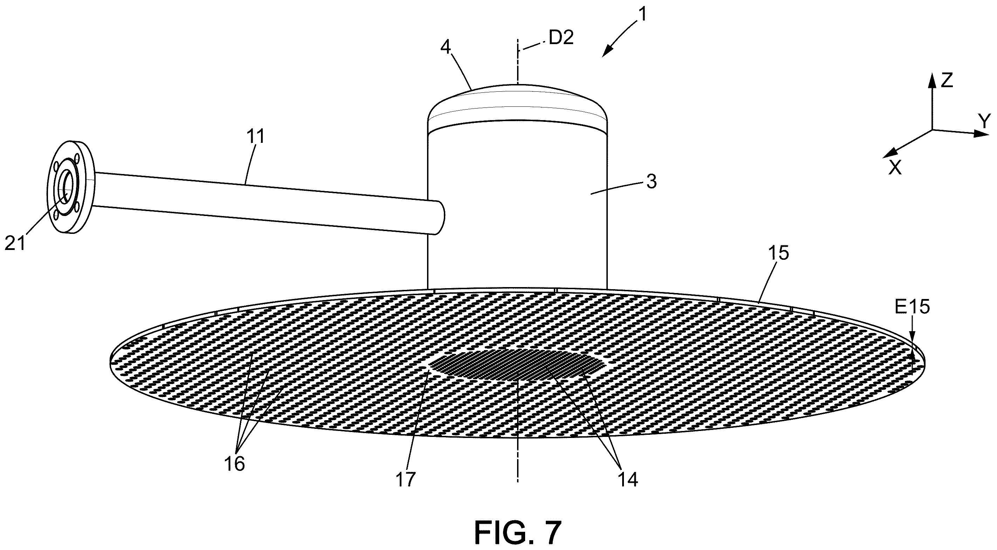

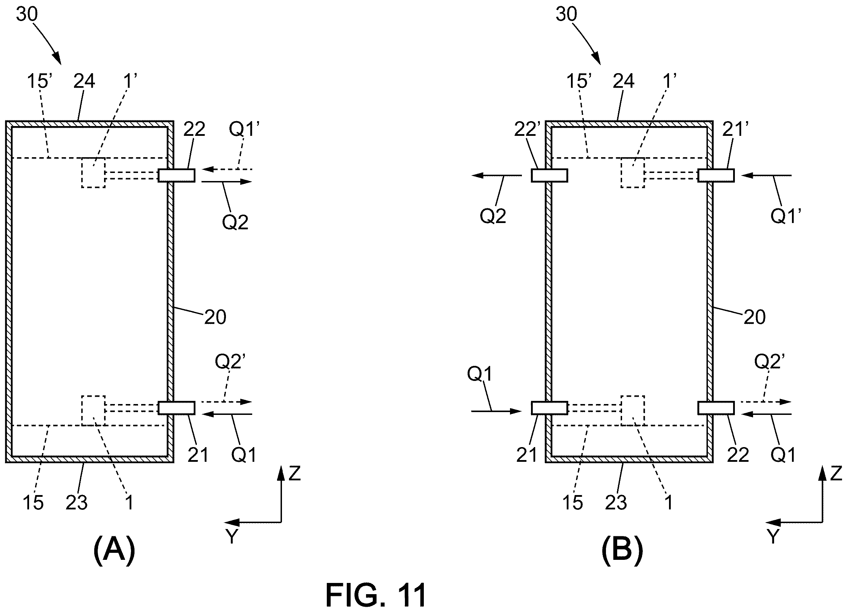

Comme représenté sur la figure 7 et sur la figure 11, la sortie 5 du corps 2 du diffuseur 1 comprend un ensemble d'orifices traversants 14 formés sur une plaque perforée 13.
Autrement dit, la sortie 5 du corps 2 du diffuseur 1 est formée par une plaque perforée 13 comportant un ensemble d'orifices traversant 14.

Une plaque 13 comportant un ensemble de perforations 14, ou orifices traversants, obture l'extrémité axiale 2-A du corps 2 qui est opposée à la paroi de fond 4.
La liaison entre la plaque perforée 13 et le corps 2 du diffuseur 1 est étanche.

Les trous traversants 14 de la plaque perforée 13 du diffuseur 1 ont ici la même forme.
Selon l'exemple illustré, les orifices traversants 14 de la plaque perforée 13 du diffuseur 1 sont de forme circulaire.
Les trous traversants 14 de la plaque perforée 13 du diffuseur 1 ont de plus le même diamètre.

Les orifices traversants de la plaque perforée 13 du diffuseur 1 ont un diamètre compris entre 1,0 millimètre et 16,0 millimètres, par exemple égal à 10,0 millimètres.

La plaque perforée 13 du diffuseur 1 comprend entre 2000 orifices traversants par mètre carré et 30000 orifices traversants par mètre carré.

Les orifices traversants 14 de la plaque perforée 13 du diffuseur 1 sont régulièrement espacés selon une première direction.
Les orifices traversants 14 de la plaque perforée 13 du diffuseur 1 sont régulièrement espacés selon une deuxième direction perpendiculaire à la première direction.
Les centres de chaque orifice traversant 14 forme ainsi un maillage régulier. Ce maillage peut être rectangulaire, ou carré comme c'est ce cas sur l'exemple illustré. Les centres des orifices peuvent aussi être disposés en quinconce.

La section efficace totale de l'ensemble d'orifices traversant 14 de la plaque perforée 13 du diffuseur 1 est comprise entre 10% et 40% de l'aire totale délimitée par le pourtour de la plaque perforée 13 du diffuseur 1.
On entend par section efficace d'un orifice l'aire transversale de l'ouverture formée, par laquelle le liquide peut s'écouler.
La section efficace totale est la somme des sections efficaces des sections efficaces individuelles. Dans l'exemple illustré où tous les orifices 14 formés dans la plaque 13 sont identiques, la section efficace totale est égale à la section efficace d'un orifice 14 multipliée par le nombre d'orifices 14 formés dans la plaque 13.

La section efficace du canal de circulation 6 est inférieure à la section efficace de la sortie 5.
La section efficace du canal de circulation 6 est comprise entre 10% et 40% de la section efficace totale de l'ensemble d'orifices traversant 14 de la plaque perforée 13 du diffuseur 1.

Le corps 2 du diffuseur 1 est de forme cylindrique.
Plus précisément, le corps 2 du diffuseur 1 a une forme générale de cylindre de révolution.

La paroi de fond 4 est reliée à la paroi latérale 3 et obture une deuxième extrémité axiale 2-B du corps 2.
La paroi de fond 4 peut être un élément fixé à la paroi latérale 3, par exemple par soudure ou par brasure.
La paroi de fond 4 est étanche. Autrement dit, la paroi de fond 4 ne comporte pas d'ouverture permettant un écoulement du liquide hors du corps 2 du diffuseur 1. La paroi latérale 3 est également étanche. Comme précédemment, la paroi latérale 3 ne comporte pas d'ouverture permettant un écoulement du liquide hors du corps 2 du diffuseur 1.
Le liquide provenant du canal de circulation 6 peut sortir du diffuseur 1 seulement en passant les orifices traversants 14 de la plaque perforée 13 du diffuseur 1, formant la sortie 5.

Le corps 2 du diffuseur 1 est rigide.
Le canal de circulation 6 du diffuseur 1 est rigide.
On entend par rigide que les éléments ne subissent pas de déformation autre qu'une éventuelle déformation élastique réversible lors d'un fonctionnement nominal de la cuve thermocline 30.

Le corps 2 du diffuseur 1 est ici un élément mécano-soudé.
Selon une variante de réalisation, le corps 2 du diffuseur peut être un élément de fonderie.
Le corps 2 du diffuseur 1 peut être en acier, par exemple en acier de type acier au carbone, ou inox de type 304L.

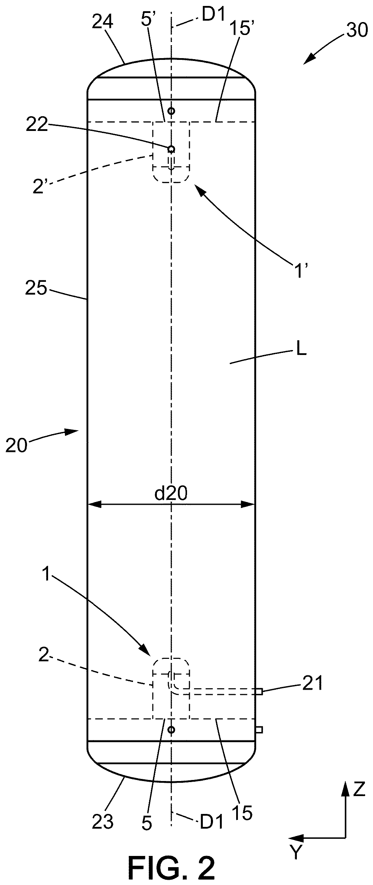

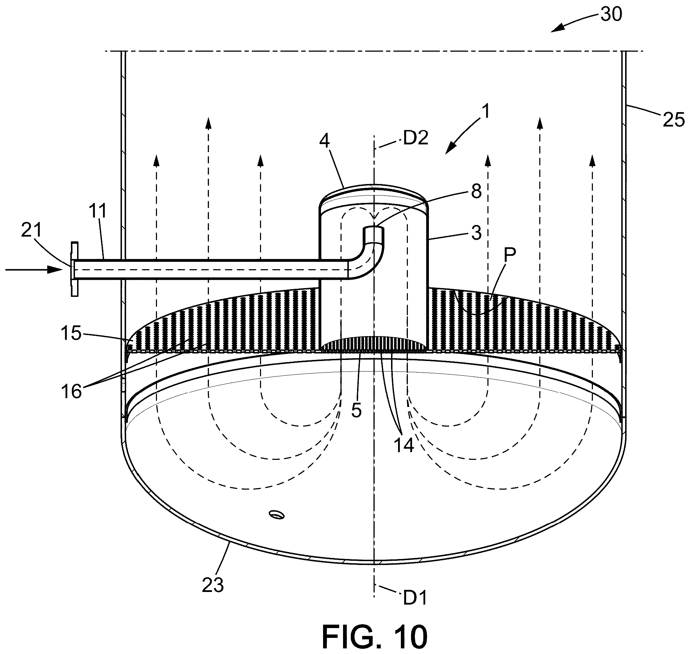

Comme illustré sur la figure 2 et sur la figure 10, l'enceinte 20 de la cuve thermocline 30 comprend une paroi de fond 23, et la sortie 5 du diffuseur 1 est tournée vers la paroi de fond 23 de l'enceinte 20.

Le liquide admis dans l'enceinte 20 de la cuve 30 est dirigé par le diffuseur 1 vers la paroi de fond 23 de l'enceinte 20, ce qui limite le mélange du liquide admis dans la cuve thermocline 30 avec le liquide qui était déjà contenu dans la cuve thermocline 30.

La distance entre la sortie 5 du diffuseur 1 et la paroi de fond 23 de l'enceinte 20 est comprise entre 10% et 100% du diamètre d20 de l'enceinte 20.

La figure 4 et la figure 5 détaillent la structure d'un mode de réalisation du diffuseur 1.
Le canal de circulation 6 comprend ici :
- une première portion 6-1 s'étendant transversalement à l'axe D2 du corps 2 depuis la paroi latérale 3 du corps,
- une deuxième portion 6-2 s'étendant parallèlement à l'axe D2 du corps 2, la deuxième portion 6-2 comprenant la deuxième extrémité 8 du canal de circulation 6,
- une portion coudée 6-3 reliant la première portion 6-1 à la deuxième portion 6-2.

Ainsi, le liquide s'écoulant dans le canal de circulation 6 est dirigé vers la paroi de fond 4 du diffuseur 1. La paroi de fond 4 étant fermée, le liquide change de direction et s'écoule dans le corps 2 du diffuseur 1 jusqu'à la sortie 5 du corps 2, formée ici par l'ensemble des orifices 14 de la plaque 13.
Le diffuseur 1 permet de dissiper une partie de l'énergie cinétique du débit de liquide admis dans l'enceinte 20 de la cuve de stockage 30, ce qui limite la tendance de ce liquide froid admis de se mélanger avec le liquide chaud déjà dans l'enceinte 20 de la cuve thermocline 30. La zone thermocline est ainsi de faible épaisseur, ce qui permet d'augmenter la quantité de liquide utilisable.

Selon l'exemple illustré, la deuxième portion 6-2 du canal de circulation 6 et la paroi latérale 3 du corps 2 sont coaxiales.
Les turbulences dans le liquide circulant dans le corps 2 sont ainsi réduites.
La première portion 6-1 du canal de circulation 6 et la paroi latérale 3 du corps 2 sont perpendiculaires.
La direction d'écoulement du liquide effectue une rotation de 90° entre la direction d'entrée dans le corps du diffuseur 2 et la direction de sortie du canal de circulation 6.

La portion coudée 6-3 du canal de circulation 6 peut posséder un rayon de courbure R constant.
Le rayon de courbure R de la portion coudée 6-3 est compris entre 100% et 500% d'un diamètre d6 du canal de circulation 6.
Le rayon de courbure R est la courbure de l'axe de la portion coudée, c'est-à-dire la courbure de la courbe formée par l'ensemble des centres des sections transversales du canal de circulation 6, ces sections transversales étant ici circulaires.
Le diamètre d6 du canal de circulation 6 est compris entre 5% et 20% du diamètre d2 du corps 2 du diffuseur 1.

La distance J entre la deuxième extrémité 8 du canal de circulation 6 et la paroi de fond 4 du corps 2 du diffuseur 1 est comprise entre 5% et 20% du diamètre d2 du corps 2 du diffuseur 1.
La distance J est déterminée à partir de l'intersection de l'axe de la deuxième portion 6-2 du canal de circulation 6 avec la paroi de fond 4.

La deuxième extrémité 8 du canal de circulation 6 et la sortie 5 du corps 2 du diffuseur 1 s'étendent ici dans des plans parallèles.

Selon l'exemple illustré, la cuve thermocline 30 comporte un canal d'alimentation 10 reliant l'entrée 21 de l'enceinte 20 au canal de circulation 6 du diffuseur 1.
Le diffuseur 1 peut ainsi être disposé à distance de l'entrée 21 de liquide, selon une direction horizontale, et donc éloigné de la paroi latérale 25 de l'enceinte 20.

Le canal d'alimentation 10 est de forme tubulaire.
Le canal d'alimentation 10 est par exemple de section transversale circulaire.
Le diamètre d10 du canal d'alimentation 10 est constant le long de sa longueur.

Comme représenté notamment sur la figure 5, le canal d'alimentation 10 est ici rectiligne.
Le canal d'alimentation 10 est rigide.
Le canal d'alimentation 10 forme un élément de fixation du diffuseur 1 à l'enceinte 20 de la cuve 30.

Selon l'exemple illustré, le canal d'alimentation 10 et le canal de circulation 6 sont formés par un même tube 11.
Le nombre de pièces à assembler est ainsi réduit, et l'assemblage du diffuseur 1 est facilité, puisqu'une pièce unique peut assurer plusieurs fonctions.

Le tube 11 formant le canal d'alimentation 10 et le canal de circulation 6 est fixé à la paroi latérale 3 du corps 2 du diffuseur 1.
La paroi latérale 3 du corps 2 du diffuseur 1 comprend un orifice de passage de même diamètre que le diamètre externe du tube 11, augmenté d'un jeu permettant l'insertion du tube 11. Le tube 11 traverse la paroi latérale 3 du corps 2. Le tube 11 est fixé à la paroi latérale 3 du corps 2, par exemple par soudure ou par brasure. La liaison entre le tube 11 et le corps 2 du diffuseur 1 est étanche.

De la même manière, la paroi latérale 25 de l'enceinte 20 comprend un orifice de passage de même diamètre que le diamètre externe du tube 11. Le tube 11 traverse la paroi latérale 25 de l'enceinte 20. Les deux pièces sont fixées par une soudure ou par une brasure, formant une liaison étanche.

La forme de la paroi de fond 4 du corps 2 du diffuseur 1 peut varier suivant les modes de réalisation.

Selon un exemple de réalisation, illustrés notamment sur les figures 5 et 7, la paroi de fond 4 du corps 2 du diffuseur 1 est de forme bombée.
Cette forme permet de réduire les turbulences dans l'écoulement du liquide circulant dans le diffuseur 1.
Selon une variante non représentée, la paroi de fond 4 est par exemple de forme hémisphérique.

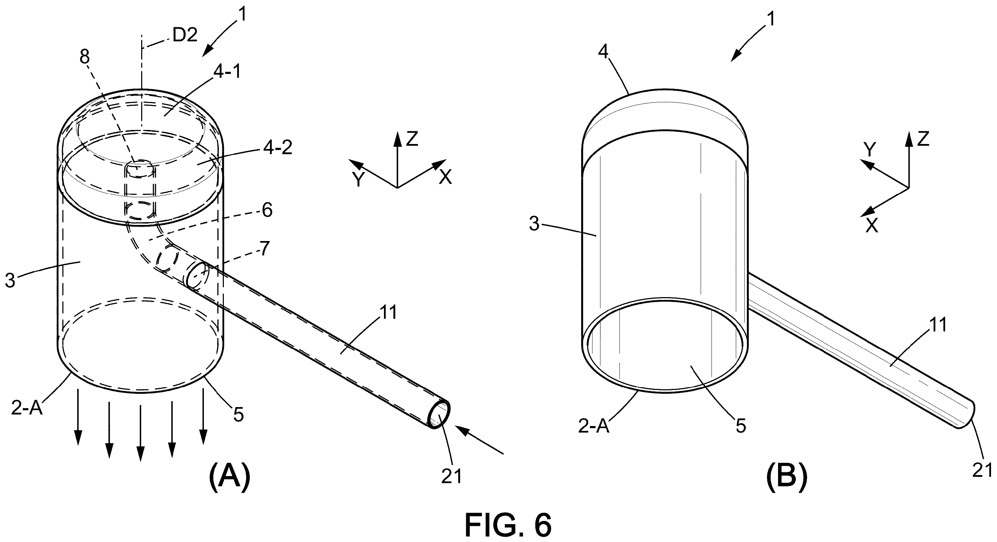

Selon une variante illustrée sur la figure 6, la paroi de fond 4 du corps 2 du diffuseur 1 comprend une portion plane 4-1 et une portion courbée 4-2.
La portion plane 4-1 forme une extrémité axiale du corps 2 du diffuseur 1. La portion courbée 4-2 relie la portion plane 4-1 à la paroi latérale 3 du corps 2.

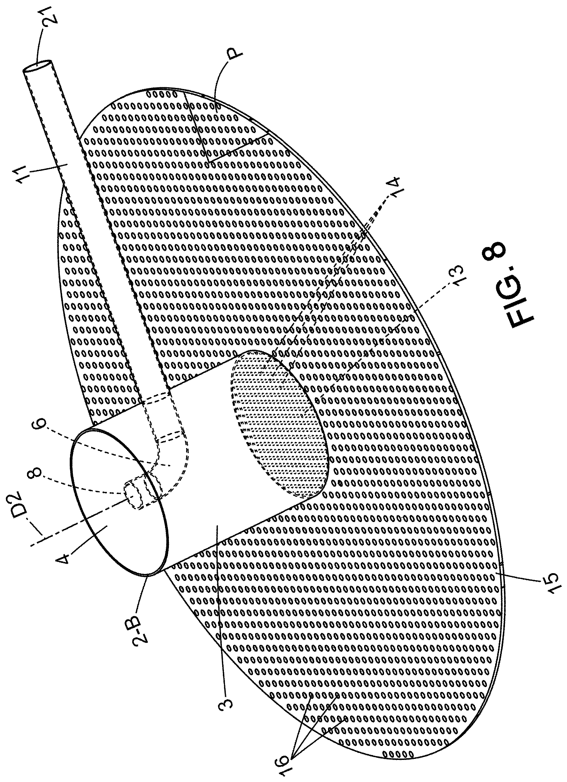

Selon un autre exemple de réalisation de la cuve thermocline 30, illustré sur la figure 8, la paroi de fond 4 du corps 2 du diffuseur 1 est plane.

L'enceinte 20 s'étend selon un axe D1, et l'axe D2 du diffuseur 1 et l'axe D1 de l'enceinte 20 sont parallèles.
De préférence, l'enceinte 20 et le corps 2 du diffuseur 1 sont coaxiaux. Autrement dit, l'axe D2 du corps du diffuseur 1 et l'axe D1 de l'enceinte 20 sont confondus.

Optionnellement, l'action du diffuseur 1 peut être complétée par l'ajout d'un autre dispositif permettant de réduire davantage le mélange du liquide chaud et du liquide froid lors des phases de charge et de décharge de la cuve 30.

Selon les modes de réalisation des figures 7 à 10, la cuve thermocline 30 comporte une plaque perforée 15 entourant le corps 2 du diffuseur 1 et s'étendant transversalement au corps 2 du diffuseur 1, la plaque perforée 15 comprenant un ensemble de trous traversants 16.

L'enceinte 20 comprend une paroi latérale 25, et la plaque perforée 15 relie la paroi latérale 25 de l'enceinte 20 au corps 2 du diffuseur 1.

L'ajout de la plaque perforée 15 permet de réduire davantage le phénomène de mélange du liquide admis dans l'enceinte 20 et du liquide déjà stocké dans l'enceinte 20. L'épaisseur de la zone thermocline peut ainsi être réduite, ce qui améliore l'efficacité de la cuve de stockage thermique 30.

Les trous traversants 16 permettent un passage de liquide d'une face de la plaque 15 à l'autre face de la plaque 15.
Les trous traversants 16 permettent un passage de liquide de la face inférieure de la plaque 15 à la face supérieure de la plaque 15, ou de la face supérieure à la face inférieure.
La plaque perforée 15 s'étend dans un plan P perpendiculaire à l'axe D1 de l'enceinte 20.

La plaque perforée 15 est de préférence reliée à la paroi latérale 25 de l'enceinte sur la totalité de sa périphérie.
La liaison entre le corps 2 du diffuseur 1 et la plaque perforée 15 est étanche.
De même, la liaison entre la plaque perforée 15 et la paroi latérale 25 de l'enceinte 20 de la cuve 30 est étanche.
Chacune des liaisons est réalisée par une soudure, ou une brasure.
Le cordon de soudure fixant la plaque 15 à la paroi latérale 25 de l'enceinte 20 peut être continu le long de la totalité du pourtour extérieur de la plaque perforée 15.
De même, le cordon de soudure fixant la plaque 15 au diffuseur 1 peut être continu.

Lorsque la liaison entre la plaque perforée 15 et le corps 2 du diffuseur 1 est étanche, et la liaison entre la paroi latérale 25 de l'enceinte 20 et la plaque perforée 15 est également étanche, le passage du liquide d'une face à l'autre de la plaque perforée 15 se fait seulement en traversant les trous traversants 16.

L'épaisseur E15 de la plaque perforée 15 est comprise entre 1 millimètre et 30 millimètres.
Les trous traversants 16 ont ici la même forme.
Les trous traversants 16 sont de forme circulaire. Les trous traversants 16 ont le même diamètre.

Les trous traversants 16 de la plaque perforée 15 ont un diamètre compris entre 8 millimètres et 26 millimètres.
Un ratio entre l'épaisseur E15 de la plaque perforée 15 et le diamètre des trous traversants 16 est compris entre 0,1 et 1,5.

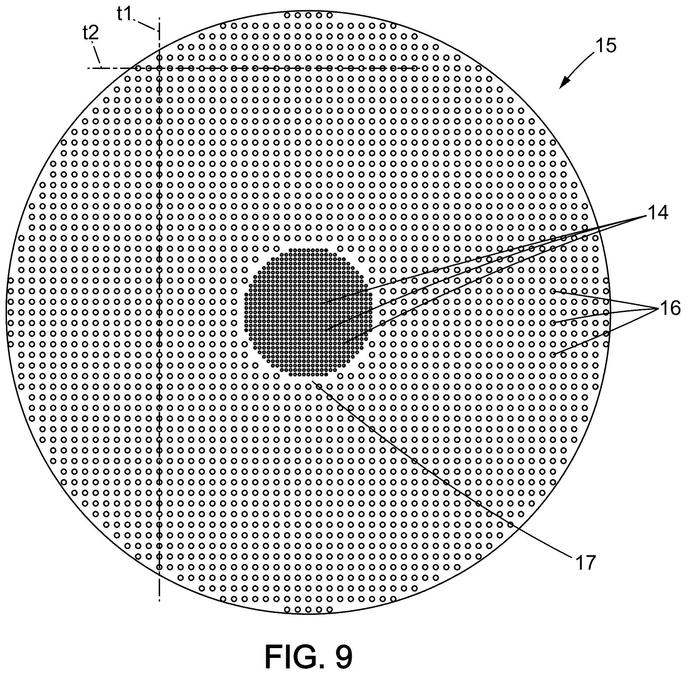

La figure 9 représente la plaque perforée 15 prise isolément.
La plaque perforée 15 comprend entre 600 orifices traversants 16 par mètre carré et 5000 orifices traversants par mètre carré.
Les orifices traversants 16 de la plaque perforée 15 sont régulièrement espacés selon une première direction t1.
Les orifices traversants 16 de la plaque perforée 15 sont régulièrement espacés selon une deuxième direction t2 perpendiculaire à la première direction.

La section efficace totale de l'ensemble d'orifices traversant 16 de la plaque perforée 15 est comprise entre 5% et 30% de l'aire totale délimitée par le pourtour de la plaque perforée 15.

Selon l'exemple illustré, la plaque perforée 15 est adjacente à la sortie 5 du corps 2 du diffuseur 1.
L'assemblage de la plaque perforée 15 sur le corps 2 du diffuseur 1 est ainsi facilité. De plus, la plaque perforée 15 peut recevoir les perforations 14 formant la sortie 5 du corps 2 du diffuseur 1.

Ainsi, la plaque perforée 15 reliant la paroi latérale 25 de l'enceinte 20 au corps 2 du diffuseur 1 et la plaque perforée 13 comprenant l'ensemble d'orifices 14 formant sortie 5 du corps du diffuseur 1 forment une même pièce.
Le nombre de pièces peut ainsi être réduit, puisqu'une même pièce remplit deux fonctions distinctes.

Dans ce cas, et comme illustré sur la figure 9, la plaque perforée 15 comprend deux types de perforations différentes. La partie radialement interne, en regard de l'extrémité axiale du corps 2 du diffuseur, comprend les perforations 14 ayant le plus diamètre, et qui sont les plus rapprochées les unes des autres.

La partie radialement externe au corps 2 du diffuseur 1 comprend les perforations 16 ayant le plus grand diamètre, et qui les plus éloignées les unes des autres.

La plaque perforée 15 comprend une zone de forme sensiblement annulaire 17, dépourvue de perforations, recevant l'extrémité axiale 2-A du corps 2, c'est-à-dire la surface axiale de la paroi latérale 3.

Selon une variante de réalisation, non représentée, la plaque perforée 15 et la plaque perforée 13 portant les orifices 14 de la sortie 5 du diffuseur 1 sont deux pièces distinctes.
La plaque perforée 15 a dans ce cas la forme d'un disque percé en son centre. Le corps 2 du diffuseur 1 est disposé dans l'orifice central de la plaque perforée 15. La plaque perforée 15 est fixée au corps 2 du diffuseur 1, par exemple par soudure ou par brasure. Le cordon de soudure peut être continu le long de la totalité du pourtour radialement interne de la plaque perforée 15.
De même, la plaque perforée 15 est fixée à la paroi latérale 25 de l'enceinte 20, par exemple par soudure ou par brasure.
Une face de la plaque perforée 15 affleure l'extrémité axiale 2-A du corps 2 du diffuseur 1.

De préférence, la cuve thermocline 30 comprend deux diffuseurs 1, 1'. Chaque diffuseur 1,1' contribue à maintenir une zone thermocline de faible épaisseur, dans les phases de charge de la cuve thermocline ainsi que dans les phases de décharge.

Selon un mode de réalisation illustré sur la partie A de la figure 11, la cuve thermocline 30 possède deux entrées/sorties, dont les rôles peuvent varier suivant le mode d'utilisation de la cuve thermocline.

La cuve thermocline 30 comporte ainsi :
- une deuxième entrée 22, configurée pour recevoir un deuxième débit de liquide, dit deuxième débit d'entrée,
- un deuxième diffuseur 1' disposé dans l'enceinte 20, le deuxième diffuseur 1' étant configuré pour orienter le deuxième débit d'entrée de liquide dans l'enceinte 20,
le deuxième diffuseur 1' comportant :
-- un corps 2' s'étendant selon un axe D2', le corps 2' comportant une paroi latérale 3', une paroi de fond 4' et un orifice de sortie 5',
-- un canal d'alimentation 6' en connexion fluidique avec la deuxième entrée 22 de l'enceinte 20, le canal de circulation 6' s'étendant à l'intérieur du corps 2' entre une première extrémité disposée sur la paroi latérale 3' et une deuxième extrémité disposée en vis-à-vis de la paroi de fond 4'.

Autrement dit, chaque entrée 21,22 de la cuve thermocline 30 est respectivement équipée d'un diffuseur 1,1' permettant de limiter le mélange du liquide admis avec le liquide déjà stocké dans l'enceinte 20 de la cuve 30.

L'enceinte 20 comprend une paroi sommitale 24, et l'orifice de sortie 5' du deuxième diffuseur 1' est tourné vers la paroi sommitale 24 de l'enceinte 20. On entend par paroi sommitale 24 la paroi située du côté supérieur de l'enceinte 20. La paroi de fond 23 et la paroi sommitale 24 forment les extrémités opposées de l'enceinte 20. La paroi de fond 23 et la paroi sommitale 24 s'étendent toutes les deux transversalement à l'axe D1 de l'enceinte 20.

La cuve thermocline 30 comporte ainsi une première entrée/sortie 21 et une deuxième entrée/sortie 22,et :
- selon un premier mode de fonctionnement :
   la première entrée/sortie 21 est configurée pour recevoir un débit de liquide, dit débit d'entrée Q1, et la deuxième entrée/sortie 22 est configurée pour fournir un débit de liquide, dit débit de sortie Q2, et
- selon un deuxième mode de fonctionnement, la première entrée/sortie 21 est configurée pour fournir un débit de liquide, dit débit de sortie Q2', et la deuxième entrée/sortie 22 est configurée pour recevoir un débit de liquide, dit débit d'entrée Q1'.

Selon le premier mode de fonctionnement, la première entrée/sortie 21 reçoit un débit de liquide Q1 à une première température T1, et la deuxième entrée/sortie 22 fournit un débit de liquide à une deuxième température T2, la deuxième température T2 étant supérieure à la première température T1.
La première entrée/sortie 21 est ainsi une entrée de liquide, et la deuxième entrée/sortie 22 est une sortie de liquide.
Sur la partie A de la figure 11, le sens de parcours du premier mode de fonctionnement est indiqué par des flèches en trait plein.

Le premier mode de fonctionnement correspond à une phase de décharge de la cuve de stockage 30, c'est-à-dire à une phase d'utilisation du liquide chaud stocké dans l'enceinte 20, illustrée notamment sur la partie A de la figure 1. Le débit d'entrée Q1 correspond à du liquide froid remplaçant le liquide chaud prélevé de la cuve, de façon à maintenir un niveau sensiblement constant.
Pendant cette phase de décharge, le diffuseur 1 disposé dans la partie inférieure de l'enceinte 20 évite le mélange du liquide froid admis avec le liquide chaud déjà contenu dans l'enceinte 20.
Le deuxième diffuseur 1', situé dans la partie supérieure de l'enceinte 20, est parcouru selon un sens de circulation opposé à celui du diffuseur 1.

Selon le deuxième mode de fonctionnement, la première entrée/sortie 21 fournit un débit Q2' de liquide à une première température T1', et la deuxième entrée/sortie 22 reçoit un débit de liquide Q1' à une deuxième température T2', la deuxième température T2' étant supérieure à la première température T1'.
La première entrée/sortie 21 est alors une sortie de liquide, et la deuxième entrée/sortie 22 est une entrée de liquide.
Sur la partie A de la figure 11, le sens de parcours correspondant au deuxième mode de fonctionnement est indiqué par des flèches en trait pointillé.

Le deuxième mode de fonctionnement correspond à une phase de charge de la cuve de stockage 30, c'est-à-dire à une phase d'introduction de liquide chaud dans l'enceinte 20, afin de le stocker en vue d'une réutilisation future. Le débit d'entrée Q1' correspond à du liquide chaud remplaçant le liquide froid qui était présent dans la cuve, et qui est progressivement remplacé par du liquide chaud. Pendant cette phase de charge de la cuve thermocline 30, le diffuseur 1' disposé dans la partie supérieure de l'enceinte 20 évite le mélange du liquide chaud admis avec le liquide froid déjà présent dans l'enceinte 20.
Le diffuseur 1, situé dans la partie inférieure de l'enceinte 20, est parcouru selon un sens de circulation opposé à celui du diffuseur 1'.

Dans chacun des deux modes de fonctionnement, le sens de circulation du liquide dans un diffuseur donné est opposé au sens de circulation dans l'autre diffuseur.
En passant d'un mode de fonctionnement à l'autre mode de fonctionnement, le sens de circulation du liquide s'inverse pour chacun des diffuseurs.

La partie B de la figure 11 illustre un autre mode de réalisation, dans laquelle la cuve thermocline 30 possède deux entrées 21, 21' et deux sorties 22, 22'.

La cuve thermocline 30 comporte ainsi :
- une deuxième entrée 21', configurée pour recevoir un deuxième débit Q1' de liquide, dit deuxième débit d'entrée,
- un deuxième diffuseur 1' disposé dans l'enceinte 20, le deuxième diffuseur 1' étant configuré pour orienter le deuxième débit d'entrée Q1' de liquide dans l'enceinte 20, le deuxième diffuseur 1' comportant :
   -- un corps 2' s'étendant selon un axe D2', le corps 2' comportant une paroi latérale 3', une paroi de fond 4' et un orifice de sortie 5',
   -- un canal d'alimentation 6' en connexion fluidique avec la deuxième entrée 22 de l'enceinte 20, le canal de circulation 6' s'étendant à l'intérieur du corps 2' entre une première extrémité 7' disposée sur la paroi latérale 3' et une deuxième extrémité 8' disposée en vis-à-vis de la paroi de fond 4'.

Comme précédemment, chaque entrée 21,21' de la cuve thermocline 30 est respectivement équipée d'un diffuseur 1,1' permettant de limiter le mélange du liquide admis avec le liquide déjà stocké dans l'enceinte 20 de la cuve 30.

Dans ce mode de réalisation, l'enceinte 20 comprend une première sortie 22 et une deuxième sortie 22'.
La première sortie 22 est disposée dans la partie inférieure de l'enceinte 20, sensiblement en vis-à-vis de la première entrée 21 par rapport à l'axe D1 de l'enceinte 20.
La deuxième sortie 22' est disposée dans la partie supérieure de l'enceinte 20, sensiblement en vis-à-vis de la deuxième entrée 21' par rapport à l'axe D1.
La première sortie 22 et la deuxième sortie 22' comporte chacune un canal de sortie tubulaire.
Ni la première sortie 22 ni la deuxième sortie 22' ne sont équipées d'un diffuseur.

Les diffuseurs 1, 1' restent identiques par rapport au mode de réalisation illustré sur la partie A de la figure 11. Seul le nombre d'entrées et de sorties de l'enceinte 20 est différent, ce qui implique une utilisation différente des deux diffuseurs 1,1'.

La cuve thermocline 30 comporte ainsi une première entrée 21, une deuxième entrée 21', une première sortie 22, une deuxième sortie 22', et :
- la première entrée 21 est configurée pour recevoir un débit de liquide, dit premier débit d'entrée Q1, et la deuxième sortie 22' est configurée pour fournir un débit de liquide, dit premier débit de sortie Q2, et
- la deuxième entrée 21' est configurée pour recevoir un débit de liquide, dit deuxième débit d'entrée Q1', et la première sortie 22 est configurée pour fournir un débit de liquide, dit deuxième débit de sortie Q2'.

La deuxième entrée 21' reçoit du liquide chaud provenant de la source de chaleur. Ce débit entrant de liquide chaud est dit deuxième début d'entrée, et est désigné par Q1'.
La deuxième sortie 22' fournit le liquide chaud destiné à être utilisé par une charge thermique. Ce débit sortant de liquide chaud, dit premier débit de sortie, est désigné par Q2.
La première entrée 21 reçoit du liquide provenant de la charge thermique, ayant cédé de la chaleur à la charge thermique et étant à une température inférieure à celle du liquide provenant de la source de chaleur. Ce débit de liquide refroidi, dit premier débit d'entrée, est désigné par Q1.
La première sortie 22 fournit du liquide froid à destination de la source de chaleur, afin que ce liquide soit réchauffé puis réintroduit dans l'enceinte 20, au niveau de la deuxième entrée 21'. Ce débit de liquide froid, dit deuxième débit de sortie, est désigné par Q2'.

Lors d'une phase de charge de la cuve thermocline 30, le débit de sortie Q2 de la deuxième sortie 22' est nul. De même, le débit d'entrée Q1 de la première entrée 21 est nul. La charge thermique ne communique pas avec l'enceinte 20. Un débit Q1' de liquide chaud provenant de la source de chaleur est admis dans l'enceinte 20 par la deuxième entrée 21'. En même temps, un débit Q2' de liquide froid sort de l'enceinte 20 par la première sortie 22. Le liquide chaud remplace donc progressivement le liquide froid contenu dans l'enceinte 20. La zone thermocline se décale progressivement vers la partie inférieure de l'enceinte 20, c'est-à-dire vers la première entrée 21 et la première sortie 22. En d'autres termes, la zone thermocline descend.

Lors d'une phase de décharge de la cuve thermocline 30, le débit d'entrée Q1' de la deuxième entrée 21' est nul. De même, le débit de sortie Q2' de la première sortie 22 est nul. La source de chaleur ne communique pas avec l'enceinte 20. Un débit Q2 de liquide chaud à destination de la charge thermique sort de l'enceinte 20 par la deuxième sortie 22'. En même temps, un débit Q1 de liquide refroidi provenant de la charge thermique est admis dans l'enceinte 20 par la première entrée 21. Le liquide froid remplace donc progressivement le liquide chaud contenu dans la cuve. La zone thermocline se décale progressivement vers la partie supérieure de l'enceinte 20, c'est-à-dire vers la deuxième entrée 21' et la deuxième sortie 22'. Autrement dit, la zone thermocline remonte.

Lors d'un mode de fonctionnement mixte dans lequel la source de chaleur recharge la cuve 30 en même temps que la cuve 30 fournit du liquide chaud à la charge thermique, les quatre débits Q1', Q2, Q1, Q2' sont tous non nuls.
La hauteur de la zone thermocline est la résultante de la différence entre les différents débits, en particulier de la différence entre le débit Q1' de liquide chaud admis dans la cuve et le débit Q2 de liquide chaud envoyé vers la charge thermique.

Dans ce mode de réalisation de la cuve thermocline 30, le sens de parcours dans chacun des diffuseurs est constant, c'est-à-dire qu'il n'y a pas d'inversion du sens de parcours en fonction du mode de fonctionnement de la cuve thermocline 30.

Le premier diffuseur 1 et le deuxième diffuseur 1' sont par exemple identiques. La fabrication peut ainsi être standardisée. De plus, les risques d'erreur de montage sont également réduits.

La cuve thermocline 30 comporte une deuxième plaque perforée 15' entourant le corps 2' du deuxième diffuseur 1' et s'étendant transversalement au corps 2' du deuxième diffuseur 1', la deuxième plaque perforée 15' comprenant un ensemble de trous 15' traversants.
Comme précédemment, l'ajout de la plaque perforée 15' permet de compléter l'action du deuxième diffuseur 1', et ainsi d'améliorer les performances thermiques de la cuve de stockage 30.

La plaque perforée 15' du diffuseur 1' est comprise, selon un axe vertical, entre la paroi sommitale 24 et le diffuseur 1'.
L'ensemble formé par le diffuseur 1 et la plaque perforée 15 peut être identique à l'ensemble formé par le deuxième diffuseur 1' et la deuxième plaque perforée 15'.

Le deuxième diffuseur 1' peut aussi être différent du premier diffuseur 1.

## Revendications

1. Cuve thermocline (30) pour le stockage d'énergie thermique, la cuve thermocline (30) comportant :
- une enceinte (20) formant un volume de stockage d'un liquide, l'enceinte (20) comportant une entrée (21) configurée pour recevoir un débit de liquide, dit débit d'entrée (Q1),
- un diffuseur (1) disposé dans l'enceinte (20), le diffuseur (1) étant configuré pour orienter le débit d'entrée (Q1) du liquide dans l'enceinte (20),
le diffuseur (1) comportant :
-- un corps (2) s'étendant selon un axe (D2), le corps (2) comportant une paroi latérale (3), une paroi de fond (4) et une sortie (5),
-- un canal de circulation (6) en connexion fluidique avec l'entrée (21) de l'enceinte (20), le canal de circulation (6) s'étendant à l'intérieur du corps (2) entre une première extrémité (7) du canal de circulation (6) disposée sur la paroi latérale (3) et une deuxième extrémité (8) du canal de circulation (6) disposée en vis-à-vis de la paroi de fond (4).

2. Cuve thermocline (30) selon la revendication 1, dans laquelle le corps (2) du diffuseur (1) est de forme tubulaire et comprend une première extrémité axiale (2-A) opposée à la paroi de fond (4),
et dans laquelle la sortie (5) du diffuseur (1) est adjacente à la première extrémité axiale (2-A) du corps (2).

3. Cuve thermocline (30) selon la revendication 1 ou 2, dans laquelle la sortie (5) du corps (2) du diffuseur (1) comprend un ensemble d'orifices traversant (14) formés sur une plaque perforée (13).

4. Cuve thermocline (30) selon l'une des revendications 1 à 3, dans laquelle l'enceinte (20) comprend une paroi de fond (23), et dans laquelle la sortie (5) du diffuseur (1) est tournée vers la paroi de fond (23) de l'enceinte (20).

5. Cuve thermocline (30) selon l'une des revendications précédentes, dans laquelle le canal de circulation (6) comprend :
- une première portion (6-1) s'étendant transversalement à l'axe (D2) du corps (2) depuis la paroi latérale (3) du corps,
- une deuxième portion (6-2) s'étendant parallèlement à l'axe (D2) du corps (2), la deuxième portion (6-2) comprenant la deuxième extrémité (8) du canal de circulation (6),
- une portion coudée (6-3) reliant la première portion (6-1) à la deuxième portion (6-2).

6. Cuve thermocline (30) selon la revendication précédente, dans laquelle la deuxième portion (6-2) du canal de circulation (6) et la paroi latérale (3) du corps (2) sont coaxiales.

7. Cuve thermocline (30) selon l'une des revendications précédentes, comportant un canal d'alimentation (10) reliant l'entrée (21) de l'enceinte (20) au canal de circulation (6) du diffuseur (1).

8. Cuve thermocline (30) selon la revendication précédente, dans laquelle le canal d'alimentation (10) et le canal de circulation (6) sont formés par un même tube (11).

9. Cuve thermocline (30) selon l'une des revendications précédentes, dans laquelle la paroi de fond (4) du corps (2) du diffuseur (1) est de forme bombée.

10. Cuve thermocline (30) selon l'une des revendications précédentes, dans laquelle l'enceinte (20) et le corps (2) du diffuseur (1) sont coaxiaux.

11. Cuve thermocline (30) selon l'une des revendications précédentes, comportant une plaque perforée (15) entourant le corps (2) du diffuseur (1) et s'étendant transversalement au corps (2) du diffuseur (1), la plaque perforée (15) comprenant un ensemble de trous traversants (16),
dans laquelle l'enceinte (20) comprend une paroi latérale (25), et dans laquelle la plaque perforée (15) relie la paroi latérale (25) de l'enceinte (20) au corps (2) du diffuseur (1).

12. Cuve thermocline (30) selon la revendication précédente, dans laquelle la plaque perforée (15) est adjacente à la sortie (5) du corps (2) du diffuseur (1).

13. Cuve thermocline (30) selon l'une des revendications précédentes, comportant :
- une deuxième entrée (22,21'), configurée pour recevoir un deuxième débit de liquide, dit deuxième débit d'entrée,
- un deuxième diffuseur (1') disposé dans l'enceinte (20), le deuxième diffuseur (1') étant configuré pour orienter le deuxième débit d'entrée de liquide dans l'enceinte (20),
le deuxième diffuseur (1') comportant :
-- un corps (2') s'étendant selon un axe (D2'), le corps (2') comportant une paroi latérale (3'), une paroi de fond (4') et un orifice de sortie (5'),
-- un canal d'alimentation (6') en connexion fluidique avec la deuxième entrée (22) de l'enceinte (20), le canal de circulation (6') s'étendant à l'intérieur du corps (2') entre une première extrémité (7') disposée sur la paroi latérale (3') et une deuxième extrémité (8') disposée en vis-à-vis de la paroi de fond (4').

14. Cuve thermocline (30) selon la revendication précédente, dans laquelle l'enceinte (20) comprend une paroi sommitale (24), et dans laquelle l'orifice de sortie (5') du deuxième diffuseur (1') est tourné vers la paroi sommitale (24) de l'enceinte (20).

15. Cuve thermocline (30) selon la revendication 13 ou 14, dans laquelle le premier diffuseur (1) et le deuxième diffuseur (1') sont identiques.

16. Cuve thermocline (30) selon l'une des revendications 13 à 15, comportant une deuxième plaque perforée (15') entourant le corps (2') du deuxième diffuseur (1') et s'étendant transversalement au corps (2') du deuxième diffuseur (1'), la deuxième plaque perforée (15') comprenant un ensemble de trous (15') traversants.
